(19) Europäisches Patentamt
European Patent Office
Office européen des brevets

(11) Veröffentlichungsnummer: **0 447 769 A2**

# (12) EUROPÄISCHE PATENTANMELDUNG

(21) Anmeldenummer: **91101256.5**

(51) Int. Cl.5: **H04L 12/56**

(22) Anmeldetag: **31.01.91**

(30) Priorität: **12.03.90 DE 4007747**
**07.04.90 DE 4011357**

(43) Veröffentlichungstag der Anmeldung:
**25.09.91 Patentblatt 91/39**

(84) Benannte Vertragsstaaten:
**AT BE CH DE ES FR GB IT LI NL SE**

(71) Anmelder: **Standard Elektrik Lorenz Aktiengesellschaft**
**Lorenzstrasse 10**
**W-7000 Stuttgart 40(DE)**
(84) **DE**

Anmelder: **ALCATEL N.V.**
**Strawinskylaan 537 (World Trade Center)**
**NL-1077 XX Amsterdam(NL)**
(84) **BE CH ES FR GB IT LI NL SE AT**

(72) Erfinder: **Pfeiffer, Bodo**
**Mozartstrasse 14**
**W-7150 Schwieberdingen(DE)**
Erfinder: **Banniza, Thomas**
**Max-Eyth-Strasse 14**
**W-7254 Hemmingen(DE)**
Erfinder: **Cesar, Bozo**
**Strassburger Strasse 19**
**W-7000 Stuttgart 40(DE)**
Erfinder: **Wahl, Stefan**
**Hirschstrasse 29**
**W-7254 Hemmingen(DE)**
Erfinder: **Menk, Klaus-Dieter**
**Wiesbadener Strasse 50**
**W-6239 Eppstein-Bremthal(DE)**

(74) Vertreter: **Brose, Gerhard et al**
**Standard Elektrik Lorenz AG Patent- und Lizenzwesen Postfach 30 09 29**
**W-7000 Stuttgart 30(DE)**

## (54) Verfahren und Schaltungsanordnung zur Verwaltung gleicher Einheiten sowie Vermittlungselement.

(57) Stand der Technik: Ein Pufferspeicher, beispielsweise in einem ATM-Vermittlungselement, empfängt statistisch anfallende Daten, die von verschiedenen Senken wieder abgerufen werden. Nach Ausgabe an die abrufenden Senken werden die Speicherplätze wieder freigegeben.

Technisches Problem: Ein Speicherplatz, der aufgrund eines Fehlers nicht freigegeben wird (sei es, daß der Abruf fehlerhaft nicht erfolgt, sei es, daß die Freigabeprozedur fehlerhaft abläuft), bleibt blokkiert.

Grundlegender Lösungsgedanke: Alle Speicherplätze, deren Inhalte bereits so lange im Speicher sind, daß sie hätten mit Sicherheit (oder wenigstens sehr großer Wahrscheinlichkeit) abgerufen werden müssen, werden unabhängig von einem Abruf freigegeben.

Lösung: Bei der Eingabe von Daten werden Angaben über den Eingabezeitpunkt mit abgespeichert. In regelmäßigen Intervallen werden sämtliche Speicherplätze auf das Alter ihres Inhalts überprüft. Bei Erreichen eines vorgegebenen Alters wird der Speicherplatz freigegeben.

EP 0 447 769 A2

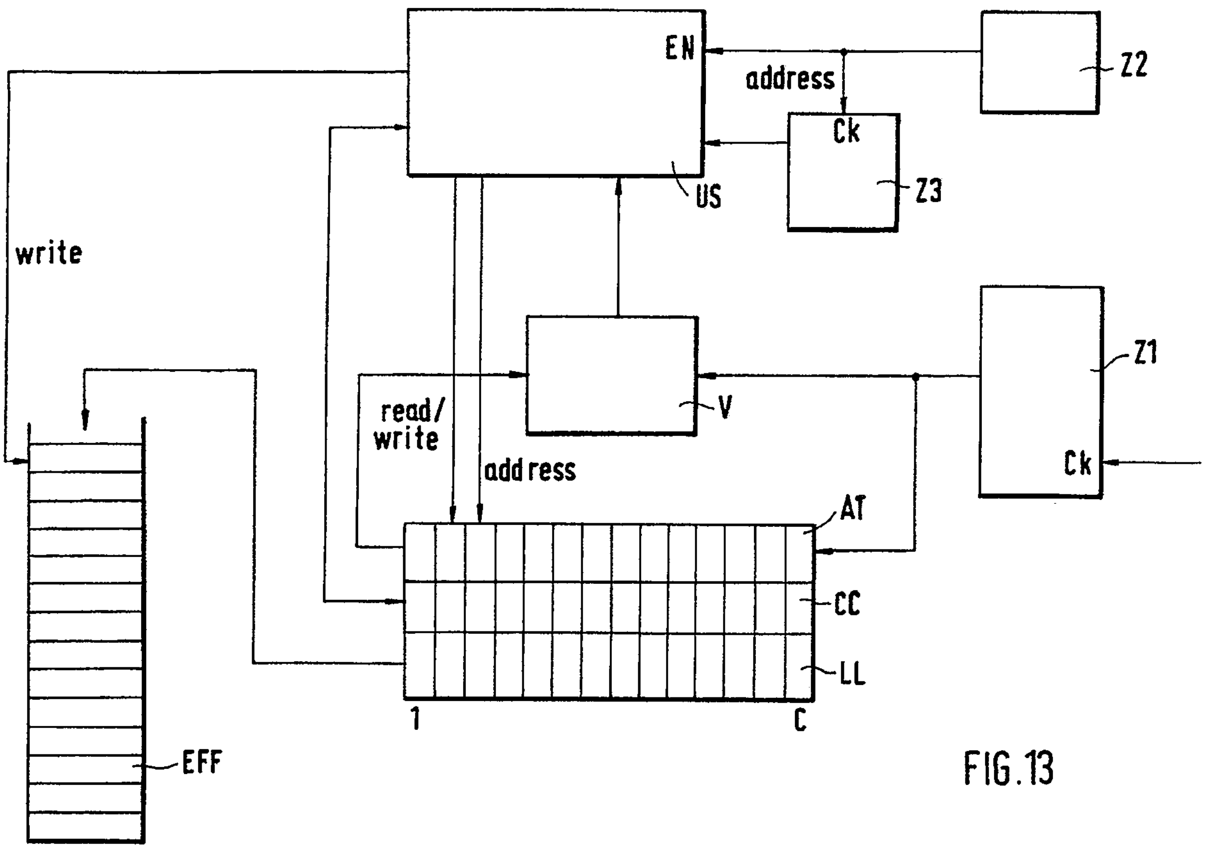
EN
address
Ck
Z2
Z3
US
write
Z1
V
read/
write
address
Ck
AT
CC
LL
1
C
EFF

FIG.13

Die Erfindung betrifft ein Verfahren zur Verwaltung gleicher Einheiten nach dem Oberbegriff von Anspruch 1, eine Schaltungsanordnung nach dem Oberbegriff von Anspruch 8 und ein Vermittlungselement für ein ATM-System nach dem Oberbegriff von Anspruch 18.

Insbesondere zum Zwecke der Nachrichtenübermittlung werden zunehmend Pufferspeicher benötigt, die irgendwelche statistisch anfallenden Daten puffern müssen, die von verschiedenen Senken wieder abgerufen werden. Nach Ausgabe an die abrufenden Senken werden die Speicherplätze wieder freigegeben.

Als ein Beispiel von vielen wird eine Speichervermittlungsstelle für den elektronischen Briefdienst genannt, wie sie in der DE-OS 36 43 767.0 beschrieben ist. Von verschiedenen Sendern gehen Nachrichten ein, die dann wieder auf verschiedene Empfänger zu verteilen sind. Um insgesamt mit möglichst wenig Speicher auszukommen, wird ein zentraler Speicher verwendet. Um das Übertragungsnetz optimal auszulasten, können die im Speicher enthaltenen Nachrichten aber nicht in derselben Reihenfolge ausgegeben werden, in der sie eingegeben wurden. Damit scheiden Speicher aus, die nach dem FIFO-Prinzip (first-in-first-out) arbeiten.

Wird nun ein Speicherplatz dieses Speichers aufgrund eines Fehlers nicht freigegeben (sei es, daß der Abruf fehlerhaft nicht erfolgt, sei es, daß die Freigabeprozedur fehlerhaft abläuft), so bleibt dieser Speicherplatz für die Dauer des weiteren Betriebs blockiert. Da es das Ziel ist, den Betrieb unterbrechungsfrei aufrecht zu erhalten und weil Fehler grundsätzlich nicht ganz auszuschließen sind, wird ohne zusätzliche Maßnahmen ein solcher Speicher immer weiter blockiert werden.

Die gleiche Problemstellung tritt auch in anderen Fällen auf, wo eine aus einer Vielzahl gleicher Einheiten bestehende Gesamtheit vorhanden ist und auf eine Anforderung hin jeweils irgendeine, gerade freie Einheit bereitgestellt wird.

Außer einem Pufferspeicher mit einer Vielzahl von Speicherblöcken kann dies beispielsweise auch ein Multiprozessorsystem mit einer Vielzahl von Prozessoren oder ein Übertragungssystem mit einer Vielzahl von Kanälen sein.

Ein Beispiel, anhand dessen die vorliegende Erfindung näher erläutert werden wird, sind ATM-Vermittlungselemente. Das gemäß der Erfindung weiterzuentwickelnde ATM-Vermittlungselement entspricht einem internen Vorschlag.

Die zunehmende Vielfalt von Telekommunikationsdiensten erfordert ein sehr flexibles Vermittlungs- und Übertragungssystem. Hierfür werden insbesondere schnelle Paketvermittlungs- und -übertragungssysteme in Betracht gezogen. Die anfallenden Daten werden dabei in Form von Paketen, Zellen genannt, übermittelt. Bei den verschiedenen Diensten folgen die zusammengehörigen Zellen je nach benötigter Übertragungskapazität unterschiedlich dicht aufeinander. Solche Systeme sind gekennzeichnet durch eine asynchrone Betriebsweise und ein auch innerhalb der Verbindung statistisches Verkehrsaufkommen. Allgemein wird hier der Begriff "Asynchronous Transfer Mode", ATM, verwendet.

Der Erfindung liegt die Aufgabe zugrunde, eine dauerhafte Blockierung zu verhindern.

Diese Aufgabe wird gelöst durch ein Verfahren nach der Lehre des Anspruchs 1, eine Schaltungsanordnung nach der Lehre des Anspruchs 8 und ein Vermittlungselement nach der Lehre des Anspruchs 18.

Vorteilhafte Ausgestaltungen der Erfindung sind den Unteransprüchen zu entnehmen.

Die Erfindung wird im folgenden anhand zweier Ausführungsbeispiele unter Zuhilfenahme der beiliegenden Zeichnungen weiter erläutert.

Fig.
1 zeigt vereinfacht den Aufbau eines erfindungsgemäßen Vermittlungselements.

Fig. 2
bis Fig. 10 zeigen das Einschreiben von Zellen in den Pufferspeicher und das Auslesen daraus.

Fig. 11
zeigt das Auftreten eines Fehlers.

Fig. 12
zeigt dessen Folgen.

Fig. 13
zeigt eine Maßnahme zur Behebung solcher Fehler.

Fig. 14
zeigt einen Überwachungsspeicher, ein sogenanntes Time Supervision Field, einer Arbiter-Logik-Schaltung.

Fig. 15A und 15B
zeigen die zeilenweise Rücksetzung des Überwachungsspeichers zur Durchführung der Selbstheilung der Arbiter-Logik-Schaltung und

Fig. 16
zeigt zwei miteinander verknüpfte Arbiter-Logik-Schaltungen zusammen mit einem gemeinsamen Speicherbereich.

Das in Fig. 1 gezeigte Vermittlungselement weist p Eingangseinheiten IP1, ..., IPp mit je einer Eingangsleitung I1, ..., Ip, einen Multiplexer Mx, einen Pufferspeicher PS mit C einzeln adressierbaren Speicherblöcken für je L Bits, einen Demultiplexer Dx, q Ausgangseinheiten OP1, ..., OPq, eine Speicherverwaltungseinheit SV, und einen Block W für die Wegewahl auf. Bevorzugt wird ein Vermittlungselement mit p = q = 16, d.h. mit 16 Eingangs- und 16 Ausgangsleitungen. Für C und L sind derzeit Zahlenwerte von C = 256 und L = 50 im Gespräch.

Die Eingangseinheit IP1 zeigt den inneren Aufbau der Eingangseinheiten etwas detaillierter. Die Eingangsleitung I1 führt auf eine Synchronisationseinrichtung SYNC, deren Ausgang auf einen Serien-Parallel-Wandler SPW und dessen Ausgang wiederum über eine Einheit ZAE zur Erkennung von Zellanfängen und -enden zur Eingangsseite des Multiplexers Mx: Die Einheit ZAE ist weiter mit je einem Eingang des Blocks W für die Wegewahl und der Speicherverwaltungseinrichtung SV verbunden.

Die Ausgangseinheit OP1 zeigt Details der Ausgangseinheiten. Die Ausgangsseite des Demultiplexers Dx ist über eine Einheit ZE zur Erkennung von Zellenden mit einem Parallel-Serien-Wandler PSW verbunden, dessen Ausgang mit der Ausgangsleitung O1 verbunden ist. Weiter ist ein Ausgabe-FIFO OFF und ein Ausgaberegister OR vorhanden. Das Ausgabe-FIFO OFF ist eingangsseitig mit einem Ausgang des Blocks W für die Wegewahl und ausgangsseitig mit dem Ausgaberegister OR verbunden, das wiederum bidirektional mit der Speicherverwaltungseinheit SV verbunden ist.

In Fig. 1 ist zur Verbindung der Eingangseinheiten IP1, ..., IPp mit den zentralen Einheiten Pufferspeicher PS,
Speicherverwaltungseinheit SV und Block W für die Wegewahl ein Multiplexer Mx und ein Netz von Einzelleitungen eingezeichnet. Der Datenstrom ist zu L Bit parallelisiert. Steuer- und Taktleitungen sind ebensowenig eingezeichnet wie die Stromversorgung. All dies sind Dinge, für die dem Fachmann genügend Lösungsmöglichkeiten bekannt sind, unter denen er wählen kann, wenn ihm bekannt ist, welche Informationen wo und wann auszutauschen sind. Insoweit gilt nichts anderes als für Vermittlungselemente für synchrone Systeme. Ein solches Vermittlungselement, das ein Bussystem zur Verbindung der Baugruppen untereinander aufweist, ist von J.M. Cotton et al in "SYSTEM 12, Digital-Koppelnetz", Elektrisches Nachrichtenwesen Band 56, Nummer 2/3, 1981, Seiten 148-160 beschrieben. Es wird darauf hingewiesen, daß ein Bussystem mit einer Mehrzahl von Sendern und einem Empfänger nichts anderes als ein Multiplexer ist. Entsprechendes gilt für die Ausgangsseite.

Anhand der Figuren 2 bis 10 wird nun der normale Vermittlungsvorgang an einem sehr vereinfachten Beispiel beschrieben. In diesem einfachen Beispiel weist der Pufferspeicher PS nur C = 14 Speicherblöcke auf, die zunächst alle leer sind. Die Speicherverwaltungseinheit SV ist durch tabellenartige Wiedergabe ihrer Speicher dargestellt. Der Kern der Speicherverwaltungseinheit SV ist ein Listenspeicher LL, der für jeden der C Speicherblöcke des Pufferspeichers PS einen Speicherplatz aufweist, der die gleiche Adresse trägt wie der zugeordnete Speicherblock und der die Adresse eines anderen Speicherblocks aufnehmen kann. Der Listenspeicher LL ist zunächst (Fig. 2) leer. Weiter ist in der Speicherverwaltungseinheit SV ein Speicher EFF für freie Speicherblöcke enthalten, der nach dem FIFO-Prinzip (first-in-first-out) arbeitet und der zunächst die Adressen sämtlicher Speicherblöcke des Pufferspeichers PS in zufälliger Reihenfolge enthält. Auch die Ausgabe-FIFOs, gezeichnet sind OFF1, OFFi und OFF16, sind zunächst leer. Tatsächlich enthält ein "leerer" Speicherplatz wie üblich irgendwelche Daten. Dies kann ein Wert sein, der ihn als leer kennzeichnet, es kann auch ein nun nicht mehr gültiger Wert von der letzten Benutzung her sein. Im letzten Fall muß auf andere Weise dafür gesorgt werden, daß er nicht mehr zur Ausgabe aufgerufen wird. Die Speicherverwaltungseinheit SV gemäß dem vorliegenden Ausführungsbeispiel weist neben dem Listenspeicher LL und mit diesem adressierbar noch C Speicherplätze eines Zählspeichers CC auf, der angibt, zu wievielen Ausgangseinheiten der Inhalt des zugeordneten Speicherblocks des Pufferspeichers PS noch auszugeben sind. Alle Speicherplätze des Zählspeichers CC stehen zunächst auf O.

Auf den Eingangsleitungen I1 und Ik kommt nun je eine Zelle an. Weitere Zellen kommen in diesem Beispiel nicht an. Die Synchronisiereinrichtungen der beiden Eingangseinheiten IP1 und IPk wandeln, zusammen mit den jeweiligen Serien-Parallel-Wandlern, die Zellen in je fünf gleich lange Blöcke um. Der jeweils erste Block, SOC1 bzw. SOCk, beginnt mit einer Marke SOC (Start of Cell) für den Beginn einer Zelle. Der jeweils letzte Block, EOC1 bzw. EOCk, enhält eine Marke EOC (End of Cell) für das Ende einer Zelle. Die Marke EOC liegt beliebig innerhalb des letzten Blocks, dort nämlich, wo die von außen kommende Zelle tatsächlich aufhört. Die Synchronisiereinrichtung fügt hier noch Leerstellen an, um die Blöcke zu füllen. Der Rest der ersten Blöcke, die zweiten bis fünften Blöcke, 1D1, 2D1, 3D1 bzw. 1Dk, 2Dk, 3Dk, und die Anfänge der fünften Blöcke bis zur EOC-Marke enthalten die Dateninhalte der Zellen.

Durch den Multiplexer Mx werden die Eingangseinheiten zyklisch abgefragt. Die Einheiten ZAE in den Eingangseinheiten IP1 und IPk erkennen an den SOC-Marken, daß weiterzugebende Information anliegt. Aus dem Speicher EFF wird die Adresse 7 als die Adresse eines freien Speicherblocks in ein Eingangsregister IR1 übernommen und der erste Block SOC1 im Pufferspeicher PS unter der Adresse 7 abgelegt. Gleichzeitig geht die SOC-Marke an den Block W für die Wegewahl und an die Speicherverwaltungseinheit SV. Im Block W wird anhand der SOC-Marke festgestellt, daß diese Zelle für die Ausgangsleitung i bestimmt ist. Im Ausgabe-FIFO OFFi wird die Adresse 7 als Startadresse einer von der Ausgangseinheit OPi auszugebenden Zelle notiert. Im Zählspeicher wird unter der Adresse 7 eine "1" notiert. Jetzt ist der Zustand gemäß Fig. 3 erreicht.

Der nächste in den Pufferspeicher PS zu übernehmende Block ist der Block SOCk von der Eingangseinheit IPk. Der Speicher EFF gibt an, daß dieser Block unter der Adresse 8 im Pufferspeicher abzuspeichern ist. Der Block W wertet die SOC-Marke dahingehend aus, daß diese Zelle sowohl zur Ausgangsleitung O1 als auch zur Ausgangsleitung Oi ausgegeben werden soll. die Adresse 8 wird deshalb sowohl im Ausgabe-FIFO OFF1 als auch im Ausgabe-FIFO OFFi abgespeichert, in letzterem an zweiter Stelle hinter der 7. Der Block SOCk selbst wird im Pufferspeicher PS unter der Adresse 8 abgespeichert, der Zählspeicher CC erhält unter der Adresse 8 den Eintrag "2". Die "8" wird im Eingangsregister IRk gespeichert. Jetzt ist der Zustand gemäß Fig. 4 erreicht.

Als nächstes wird der Block 1D1 unter der nächsten freien Adresse "2" in den Pufferspeicher PS eingespeichert, im Zählspeicher CC wird unter Adresse 2 eine "1" eingetragen, im Listenspeicher wird unter der Adresse 7 eine "2" eingetragen. Die Adresse 7 wurde in IR1 als diejenige Adresse zwischengespeichert, unter der der vorangehende Block dieser Zelle abgespeichert wurde. In gleicher Weise werden die übrigen Blöcke aus der Eingangseinheit IP1 und IPk abgespeichert.

Am Ende der Eingabe, das in Fig. 5 dargestellt ist, ist die von I1 gekommene Zelle der Reihe nach unter den Adressen 7, 2, 3, 4 und 6 und die von Ik gekommene Zelle unter den Adressen 8, 1, 5, 9 und 13 abgespeichert. Der Speicher EFF weist nur noch vier freie Speicherblöcke aus. Der Listenspeicher LL enthält die o.g. Adressfolgen, wobei anstelle einer Folgeadresse für den jeweils letzten Block ein Sonderzeichen, hier "E", eingetragen ist.

Anhand der Fig. 6 bis 10 wird die Ausgabe der Zellen beschrieben, die sich an die komplette Eingabe anschließen soll. Die Ausgabe wird von den Ausgangseinheiten aus veranlaßt; diese werden hierzu zyklisch aktiviert.

Das Ausgabe-FIFO OFF1 zeigt an, daß über die Ausgangsleitung O1 eine Zelle auszugeben ist, deren erster Block unter der Adresse 8 im Pufferspeicher abgelegt ist. Diese Adresse 8 wird ins Ausgaberegister OR1 übernommen, die Adresse 8 an Pufferspeicher PS, Listenspeicher LL und Zählspeicher CC angelegt, der erste Block aus PS übernommen, die Folgeadresse "1" aus LL nach OR 1 übernommen und der Zählspeicher von "2" nach "1" dekrementiert, vergl. Fig. 6.

Fig. 7 zeigt die nächste Ausgabe, die von OPi veranlaßt wird. Die Anfangsadresse 7 wird von OFFi nach ORi übernommen, an PS, LL und CC angelegt, der erste Block aus PS ausgegeben, die Folgeadresse 2 nach ORi übernommen und CC von "1" nach "0" dekrementiert. Diese "0" gibt nun an, daß der Inhalt des Blocks 7 in PS nicht weiter benötigt wird; dieser Block ist nun frei, seine Adresse wird in den Speicher EFF für freie Speicherblöcke zurückgegeben.

Fig. 8 zeigt den Zustand, der sich ergibt, wenn an O1 und Oi je eine Zelle ausgegeben ist. Sowohl mittels der Einheiten ZE1 und ZEi zur Erkennung von Zellenden als auch anhand der Inhalte der Ausgaberegister OR1 und ORi wird ein Zellende erkannt. Durch nicht eingezeichnete Baugruppen wird veranlaßt, daß Leerblöcke gesendet werden. OFFi zeigt aber an, daß noch eine weitere Zelle von der Ausgangseinheit OPi zu senden ist und daß deren erster Block unter der Adresse 8 in PS gespeichert ist. Deren Ausgabe beginnt mit dem Zustand in Fig. 9 und endet mit dem Zustand in Fig. 10.

Alle Blöcke sind nun ausgegeben, Pufferspeicher PS und Listenspeicher LL sind frei, der Zählspeicher CC weist überall eine "0" auf, der Speicher EFF enthält wieder die Adressen sämtlicher Blöcke von PS, wenn auch in anderer Reihenfolge; an allen Ausgangs leitungen werden Leerblöcke gesendet.

Eingaben und Ausgaben erfolgen in Wirklichkeit nicht in der beschriebenen Weise zeitlich getrennt, sondern können gleichzeitig ablaufen. Der Pufferspeicher PS wird als Dual-Port-RAM ausgeführt, so daß Ein- und Ausgänge unabhängig voneinander darauf zugreifen können. Das bedeutet insbesondere, daß die ersten Blöcke einer Zelle bereits ausgelesen werden können, bevor die letzten eingeschrieben worden sind. Somit wird eine sehr kurze Verzögerung der Zellen und eine möglichst kurze Belegung des Pufferspeichers PS ermöglicht.

Fig. 11 greift nochmals die Situation auf, wie sie sich am Ende der Eingabe in Fig. 5 darstellt. Nun soll aber aufgrund irgend eines Fehlers im Listenspeicher unter Adresse 8 die dort eingetragene Folgeadresse "1" in "3" abgeführt werden (Blitzpfeil in Fig. 11). Dies hat verschiedene weitere Fehler zur Folge, die in Fig. 12 gezeigt sind. Erstens wird diejenige Zelle, zu der der Block in Adresse 8 gehört, falsch ausgegeben und zwar zweimal. Zweitens wird der Eintrag im Zählspeicher für die fälschlicherweise mehrfach ausgegebenen Blöcke negativ. Da aber nur der Inhalt "0" eine Folgewirkung hat, nämlich die Eintragung freier Speicherblöcke in den Speicher EFF, ist dies nicht weiter von Bedeutung. Die Blöcke mit den Adressen 1, 5, 9 und 13, die eigentlich auf den Block 8 folgen sollten, werden aber überhaupt nicht ausgegeben (in Fig. 12 mit einem Stern gekennzeichnet). Dies hat zur Folge, daß sie auch nicht freigegeben werden können. Diese Blöcke sind für die Dauer des weiteren Betriebs blockiert. Da es das Ziel ist, den Betrieb unterbrechungsfrei aufrecht zu erhalten und weil Fehler grundsätzlich nicht ganz auszuschließen sind, wird ohne zusätzliche Maßnahmen ein solcher Speicher immer weiter blockiert werden.

Ausgangspunkt für die Lösung dieses Problems ist die Erkenntnis, daß bei fehlerfreiem Betrieb die Verweildauer einer Zelle im Vermittlungselement begrenzt ist. Auf jeder Ausgangsleitung fließen kontinuierlich Daten ab. Die Übertragungszeit für jede einzelne Zelle ist begrenzt. Durch die Ausgabe-FIFOs OFF ist auch die Zahl der für jeden Ausgang zwischenspeicherbaren Zellen begrenzt. Es kann also eine Zeit angegeben werden, nach der eine gerade angekommene Zelle spätestens wieder ausgegeben sein muß. Daß diese Zeit möglicherweise nicht exakt definiert, sondern nur aus statistischen Betrachtungen ermittelt werden kann, ist prinzipiell unerheblich. Der Grundgedanke für die Lösung dieses Problems ist also der, daß alle Eintragungen, die älter als diese Maximalzeit sind, als fehlerhaft angesehen und gelöscht werden.

Die Schaltung nach Fig. 13 realisiert diese Lösung. Dem Listenspeicher LL wird außer dem Zählspeicher CC noch ein Altersspeicher AT zugeordnet. Weiter sind eine Überwachungsschaltung US, ein Vergleicher V, ein erster Zähler Z1, ein zweiter Zähler Z2 und ein dritter Zähler Z3 vorhanden. Die Überwachungsschaltung US kann Eingaben in den Altersspeicher AT und den Zählspeicher CC veranlassen und deren Inhalte lesen sowie freie Speicherblöcke in den Speicher EFF eintragen. Der Zähler Z1 zählt mit einem Takt, dessen Intervalle der Übertragungsdauer einer mittellangen Zelle entsprechen. Bei einem Zählerstand, der der doppelten, als maximal angesehenen Verweildauer entspricht, wird der Zähler Z1 zurückgesetzt. Wird in den Pufferspeicher PS ein Block eingetragen, so veranlaßt die Überwachungsschaltung US durch Anlegen der zugehörigen Adresse an den Altersspeicher AT und durch Anlegen eines write-Impulses, daß der augenblickliche Zählerstand von Z1 in AT eingeschrieben wird.

Anhand der Figuren 14 bis 16 wird im folgenden ein weiteres Ausführungsbeispiel beschrieben:

Bei der Verwendung eines Speicherbereichs, insbesondere eines Linked-List-Speichers - also eines Speichers mit verketteten Adressenlisten - ist es erforderlich, die Adressen freier Speicherplätze herauszufinden. Die Suche nach Adressen von freien Speicherplätzen eines Speicherbereichs erfolgt mittels einer Arbiter-Logik-Schaltung, die einen Überwachungsspeicher nach freien Speicherplätzen absucht, die Adressen des Speicherbereichs zugeordnet sind. Ein derartiger Überwachungsspeicher, der auch als Time Supervision Field bezeichnet wird, ist in Fig. 14 dargestellt, wobei hier ein 2-Bit-Speicherfeld dargestellt ist. Wenn eines oder zwei Bits dieses Speichers eine logische "1" enthalten, ist die zugehörige Adresse des Speicherbereichs belegt.

Die Arbiter-Logik-Schaltung durchsucht das 2-Bit-Speicherfeld, beispielsweise ausgehend von der niedrigsten Adresse. Sobald eine Adresse eines freien Speicherplatzes aufgefunden wird, wird diese Adresse durch die Arbiter-Logik-Schaltung ausgelesen und mittels eines SET-Signals als belegt markiert. Die Adresse des Speicherbereichs kann nunmehr für einen Arbeitsvorgang zur Verfügung gestellt werden.

Wenn nun nach einer neuen Adresse gesucht wird, so findet die Arbiter-Logik-Schaltung den nächsten freien Speicher im Überwachungsspeicher sehr schnell auf, weil belegte Speicher mit den SET-Signals markiert wurden.

Wenn ein freier Speicherplatz im Speicherbereich aufgefunden wird, werden die beiden zugehörigen Bits der Adresse im Überwachungsspeicher auf "O" gesetzt.

Es ist nun möglich, daß aufgrund einer Fehlfunktion einzelne Bits des Überwachungsspeichers eine "1" enthalten, so daß die zugehörige Adresse des Speicherbereichs als belegt gedeutet wird. Dadurch könnte im Laufe der Zeit das Überwachungsfeld vollkommen belegt werden, so daß keine freien Adressen des Speicherbereichs mehr herausgefunden werden können. Um eine daraus resultierende Blockierung der zugehörigen Schaltung zu vermeiden, wird eine Selbstheilungsfunktion verwirklicht. Dazu werden die Zeilen des Überwachungsspeichers, die obere bzw. die untere Zeile des 2-Bit-Speicherfelds gemäß Fig. 14, durch eine Überwachungsschaltung, die sogenannte Time Supervision Control, auf "O" gesetzt. Dabei wird beispielsweise zunächst gemäß Fig. 15A die untere Zeile des 2-Bit-Speicherfelds auf "O" gesetzt und nach einer vorgegebenen Zeit T die obere Zeile dieses Speichers gemäß Fig. 15B ebenfalls auf "O" gesetzt. Die Zeit T muß so gewählt sein, daß die Zeit zwischen zwei Rücksetzbefehlen länger ist als die Zeitspanne, die der Speicherplatz im sogenannten Worst-Case dem Speicherbereich zur Verfügung gestellt werden muß.

Auf diese Weise ist sichergestellt, daß die Adressen des Überwachungsspeichers regelmäßig auf "O" zurückgesetzt werden, so daß freie Adressen des Speicherbereichs in regelmäßigen Abständen zur Verfügung stehen, auch wenn aufgrund eines Fehlers die Adressen als belegt angegeben werden.

Die Überwachungsschaltung, die Time Supervision Control, kann auch dazu verwendet werden, die Suchlogik-Schaltung bei Inbetriebnahme zu initialisieren, indem alle Zeilen eines Überwachungsspeichers, hier also die beiden Zeilen des 2-Bit-Speicherfeldes gemäß Fig. 14, auf "0" gesetzt werden. Dadurch ergibt sich eine besonders einfache Initialisierung der Schaltung.

Aus dem oben Gesagten ergibt sich, daß die Adressen des Speicherbereichs ohne eine aufwendige Überwachungseinrichtung, wie sie aus dem Stand der Technik bekannt ist, immer wieder zur Verfügung gestellt werden können.

Es ist möglich, mehrere Suchlogik-Schaltungen der hier beschriebenen Art miteinander zu koppeln, dergestalt, daß eine Staffelung bzw. gestaffelte Verknüpfung der Schaltungen erfolgt. Dabei kann eine Arbiter-Logik-Schaltung mehreren untergeordneten Arbiter-Logik-Schaltungen zugeordnet werden und feststellen, welche dieser Schaltungen freie Adressen zeigen. Die untergeordneten Arbiter-Logik-Schaltungen können direkt Speicherbereichen zugeordnet sein. Es ist jedoch auch möglich, diesen weitere untergeordnete Arbiter-Logik-Schaltungen zuzuordnen. Auf diese Weise kann eine große Zahl von Speicherplätzen eines Speicherbereichs von relativ wenigen Arbiter-Logik-Schaltungen verwaltet werden.

Bei einer speziellen Verknüpfung gemäß Fig. 16 können überdies Speicherbereiche variabler Größe verwaltet werden.

Gemäß Fig. 16 ist ein Speicherbereich SB zwei Arbiter-Logik-Schaltungen AL1 und AL2 zugeordnet. Beiden Arbiter-Logik-Schaltungen ist ein gemeinsamer Überwachungsspeicher ein Time Supervision Field TSF zugeordnet, wobei einzelne Adressenfelder des Time Supervision Field sowohl der ersten Arbiter-Logik-Schaltung AL1 als auch der zweiten Arbiter-Logik-Schaltung AL2 zugeordnet sind.

Bei einer derartigen Schaltung muß die Richtung der Suche nach freien Adressen in den einzelnen Arbiter-Logik-Schaltungen in entgegengesetzter Richtung erfolgen. Die Suche nach freien Adressen in der ersten Arbiter-Logik-Schaltung AL1 erfolgt beispielsweise von links nach rechts, was durch einen Pfeil dargestellt ist. Die Suche in der zweiten Arbiter-Logik-Schaltung AL2 erfolgt in entgegengesetzter Richtung, was wiederum durch einen Pfeil angedeutet ist.

Bei speziellen Anwendungen dieser Schaltung kann es vorteilhaft sein, die Adressen des Speicherbereichs SB von 1 bis v einer ersten Funktion zuzuordnen und die Adressen von v+1 bis c einer zweiten Funktion. Dabei brauchen diese Bereiche nicht festgelegt zu sein, sofern die Grenze dieser Bereiche im Überschneidungsbereich der beiden Arbiter-Logik-Schaltungen AL1 und AL2 liegt. Bei der Suche nach freien Adressen fangen die Arbiter-Logik-Schaltungen jeweils von einem Randbereich des Speicherbereichs SB an, freie Adressen herauszusuchen. Es ist ohne weiteres ersichtlich, daß keinerlei Probleme auftreten, sofern die Adressen der freien Speicherplätze des Speicherbereichs in dem Feld liegen, in dem keine Überlappung der Arbiter-Logik-Schaltungen vorliegt. Sobald eine freie Adresse im Überlappungsbereich von einer der Arbiter-Logik-Schaltungen ausgelesen wird, kann dies von einer Überwachungslogik festgestellt werden, die dann die zutreffende Adresse des freien Speicherplatzes im Speicherbereich SB ausgibt.

Nach allem ergibt sich eine wesentliche Vereinfachung der Suchlogik-Schaltung zur Auffindung der Adresse eines freien Speicherplatzes in einem Speicherbereich. Der zugehörige Überwachungsspeicher kann Teil des der Suchlogik-Schaltung zugeordneten Speicherbereichs sein, so daß sich ein regelmäßiges Design der Gesamtschaltung ergibt. Dadurch, daß aufwendige Überwachungsschaltungen, die bei FIFO-Speichern erforderlich waren, entfallen, kann Chip-Fläche eingespart werden. Bei Inbetriebnahme der Suchlogik-Schaltung ist eine einfache Initialisierung des Systems durch die Überwachungsschaltung, die Time Supervision Control, möglich. Während einer Suchroutine auftretende Fehler werden durch die hier beschriebene Selbstheilung einfach eliminiert. Aufwendige Suchroutinen können entfallen.

Bei einer Verschachtelung verschiedener Arbiter-Logik-Schaltungen können einerseits große Speicherbereiche abgedeckt werden. Andererseits ist es möglich, bei einer Überlappung der Arbiter-Logik-Schaltungen gemäß Fig. 16 variable Speicherbereiche vorzusehen und damit eine optimale Speicherausnutzung zu erreichen.

Die anhand der Figuren 14 bis 16 erläuterte Suchlogik-Schaltung zur Auffindung der Adresse eines freien Speicherplatzes in einem Speicherbereich ist ohne weiteres verwendbar, um freie Prozessoren in einem Multiprozessorsystem aufzuwenden.

In diesem Fall sind dem Überwachungsspeicher die einzelnen Prozessoren zugeordnet. Die Arbiter-Logik-Schaltung sucht nun den Überwachungsspeicher nach freien Prozessoren durch, um diese zum Beispiel für die Bearbeitung von Programmschritten bereitstellen zu können. Freie Prozessoren werden auf diese Weise ausgesucht und ihre Adresse im Überwachungsspeicher als belegt markiert. Bei der nächsten Suche nach einem freien Prozessor kann die Arbiter-Logik-Schaltung die belegten Prozessoren sehr leicht feststellen und auf diese Weise freie Prozessoren schneller herausfinden.

Es ist ohne weiteres ersichtlich, daß mit Hilfe der beschriebenen Schaltung freie Kanäle eines Datenübertragungssystems auffindbar sind. Dazu werden die Kanäle des Datenübertragungssystems dem Überwachungsspeicher zugeordnet. Auf die oben beschriebene Weise findet die Arbiter-Logik-Schaltung freie Kanäle im Überwachungsspeicher auf und kann diese zur Übertragung von Daten bereitstellen. Derartig aufgesuchte freie Kanäle werden im Überwachungsspeicher markiert und beim nächsten Suchvorgang als belegt gedeutet. Auf diese Weise lassen sich freie Kanäle schnell und einfach aufsuchen. Der Überwachungsspeicher, der hier den Prozessoren bzw. Kanälen zugeordnet ist, kann auch bei der hier beschriebenen Verwendung mit Hilfe der oben erläuterten Time Supervision Control rückgesetzt werden. Dabei werden fehlerhafte Bits gelöscht und vermieden, daß der Überwachungsspeicher freie Einheiten als belegt markiert.

Eine weitere Realisierungsmöglichkeit desselben Grundgedankens ergibt sich durch Zuordnung je eines Zählers oder Monoflops zu jeder Einheit. Durch Setzen des Zählers auf einen Maximalwert oder durch Setzen des Monoflops kann der Beginn einer Zeitspanne festgelegt werden. Durch einen Zeittakt wird der Zähler bis auf Null stufenweise zurückgestellt. Eine Einheit mit Zählerstand Null oder rückgesetztem Monoflop gilt dann als frei. Ein bewußtes Rückstellen des Zählers oder Rücksetzen des Monoflops beim Freiwerden der zugeordneten Einheit ist nicht ausgeschlossen und durchaus sinnvoll.

## Patentansprüche

**1.** Verfahren zur Verwaltung einer aus einer Vielzahl gleicher Einheiten bestehenden Gesamtheit, welches auf eine Anforderung hin jeweils eine freie Einheit aus der Gesamtheit bereitzustellen hat,
**dadurch gekennzeichnet,**
daß jede Einheit als frei angesehen wird, bei der die letzte Bereitstellung länger als eine vorgegebene Zeit zurückliegt.

**2.** Verfahren nach Anspruch 1, dadurch gekennzeichnet, daß jede Einheit auch dann als frei angesehen wird, wenn auf andere Weise eine Freigabe erfolgt ist.

**3.** Verfahren nach Anspruch 1, dadurch gekennzeichnet, daß bei der Bereitstellung einer Einheit in einem dieser Einheit zugeordneten Speicherplatz (AT, TSF) eine Angabe über den Belegungszustand abgespeichert wird.

**4.** Verfahren nach Anspruch 3, dadurch gekennzeichnet, daß die Angabe über den Belegungszustand eine Angabe über den Bereitstellungszeitpunkt ist, daß regelmäßig Kontrollen aller Angaben erfolgen und daß eine Einheit als frei gekennzeichnet wird, wenn ihr Bereitstellungszeitpunkt länger als die vorgegebene Zeit zurückliegt.

**5.** Verfahren nach Anspruch 1, dadurch gekennzeichnet, daß eine Einheit dadurch als frei gekennzeichnet wird, daß eine sie kennzeichnende Adresse in einem FIFO-Speicher (EFF) gespeichert wird und daß die Bereitstellung einer Einheit durch Ausgabe einer Adresse aus dem FIFO-Speicher erfolgt.

**6.** Verfahren nach Anspruch 3, dadurch gekennzeichnet, daß jeder einer Einheit zugeordnete Speicherplatz zwei Speicherpositionen für je ein Bit enthält, die gemeinsam gesetzt und die getrennt rückgesetzt werden können, daß als Angabe über den Belegungszustand bei der Bereitstellung der zugeordneten Einheit beide Bits gesetzt werden, daß Rücksetzimpulse in einem durch die vorgegebene Zeit bestimmten Abstand periodisch erzeugt werden, daß die Rücksetzimpulse abwechselnd auf die beiden Speicherpositionen aller Speicherplätze wirken und daß diejenigen Einheiten als frei angesehen werden, deren beide zugeordnete Speicherpositionen rückgesetzt sind.

**7.** Verfahren nach Anspruch 1, dadurch gekennzeichnet, daß jeder Einheit ein Element zum Feststellen eines Zeitablaufs zugeordnet ist.

**8.** Schaltungsanordnung, die eine aus einer Vielzahl gleicher Einheiten bestehende Gesamtheit derart verwaltet, daß auf eine Anforderung hin jeweils eine freie Einheit aus der Gesamtheit bereitgestellt wird,
**dadurch gekennzeichnet,**
daß jeder Einheit Mittel (AT, TSF) zugeordnet sind, mittels derer feststellbar ist, ob die letzte Bereitstellung länger als eine vorgegebene Zeit zurückliegt.

**9.** Schaltungsanordnung nach Anspruch 8, dadurch gekennzeichnet, daß jeder Einheit ein Speicherplatz zugeordnet ist.

**10.** Schaltungsanordnung nach Anspruch 8, dadurch gekennzeichnet, daß jeder Einheit ein Element zum Feststellen eines Zeitablaufs zugeordnet ist.

**11.** Schaltungsanordnung nach Anspruch 8, dadurch gekennzeichnet, daß die aus einer Vielzahl gleicher Einheiten bestehende Gesamtheit ein Pufferspeicher (PS, SB) mit einer Vielzahl von Speicherblöcken ist.

**12.** Schaltungsanordnung nach den Ansprüchen 11 und 9, dadurch gekennzeichnet, daß dem Pufferspeicher (PS) ein Altersspeicher (AT) zugeordnet ist, in dem jedem Speicherblock des Pufferspeichers ein Speicherplatz zugeordnet ist.

**13.** Schaltungsanordnung nach Anspruch 12, dadurch gekennzeichnet, daß bei der Eingabe einer Information in einen Speicherblock des Pufferspeichers (PS) in den zugeordneten Speicherplatz des Altersspeichers (AT) eine Angabe über den Eingabezeitpunkt mit eingegeben wird, daß regelmäßig Kontrollen aller Angaben im Altersspeicher erfolgen und daß ein Speicherblock als frei bezeichnet wird, wenn der Eingabezeitpunkt länger als die vorgegebene Zeit zurückliegt.

**14.** Schaltungsanordnung nach Anspruch 12, dadurch gekennzeichnet, daß jeder einem Speicherblock (SB) zugeordnete Speicherplatz (TSF) zwei Speicherpositionen für je ein Bit enthält, die gemeinsam gesetzt und die getrennt rückgesetzt werden können, daß als Angabe über den Belegungszustand bei der Eingabe in den zugeordneten Speicherblock beide Bits gesetzt werden, daß Rücksetzimpulse in einem durch die vorgegebene Zeit bestimmten Abstand periodisch erzeugt werden, daß die Rücksetzimpulse abwechselnd auf die beiden Speicherpositionen aller Speicherplätze wirken und daß diejenigen Speicherblöcke als frei angesehen werden, deren beide zugeordnete Speicherpositionen rückgesetzt sind.

**15.** Schaltungsanordnung nach Anspruch 8, dadurch gekennzeichnet, daß die aus einer Vielzahl gleicher Einheiten bestehende Gesamtheit ein Multiprozessorsystem mit einer Vielzahl von Prozessoren ist.

**16.** Schaltungsanordnung nach Anspruch 8, dadurch gekennzeichnet, daß die aus einer Vielzahl gleicher Einheiten bestehende Gesamtheit ein Übertragungssystem mit einer Vielzahl von Kanälen ist.

**17.** Schaltungsanordnung (AL1) nach Anspruch 8, dadurch gekennzeichnet, daß sie mit einer zweiten, gleichartigen Schaltungsanordnung (AL2) so verbunden ist, daß mindestens ein Teil aus der Vielzahl gleicher Einheiten von beiden Schaltungsanordnungen (AL1, AL2) verwaltet wird.

**18.** Vermittlungselement für ein ATM-System mit p Eingangseinheiten (IP1, ..., IPp) und q Ausgangseinheiten (OP1, ..., OPq), mit einem zentralen Pufferspeicher (PS) mit C Speicherblökken für je L Bits, mit einem Multiplexer (Mx) zum wahlfreien Verbinden einer der Eingangseinheiten mit dem Eingang des Pufferspeichers, mit einem Demultiplexer (Dx) zum wahlfreien Verbinden des Ausgangs des Pufferspeichers mit einer der Ausgangseinheiten und mit einem Listenspeicher (LL) mit C Speicherplätzen für je eine Adresse des Pufferspeichers, wobei jeder Speicherblock im Pufferspeicher demjenigen Speicherplatz im Listenspeicher zugeordnet ist, der die gleiche Adresse aufweist, bei dem jede an einer der Eingangseinheiten ankommende Zelle in Blöcke zu je L Bits unterteilt wird, bei dem jeder Block in einen freien Speicherblock des Pufferspeichers eingeschrieben wird und bei dem im Listenspeicher für jeden Speicherblock des Pufferspeichers die Adresse desjenigen Speicherblocks abgespeichert wird, in dem der nächste Block derselben Zelle eingeschrieben wird,
**dadurch gekennzeichnet**,
daß jedem der C Speicherplätze (LL) des Listenspeichers ein zweiter Speicherplatz (AT) mit gleicher Adresse zugeordnet ist, der dafür vorgesehen ist, eine Angabe aufzunehmen, aus der bestimmt werden kann, wie lange die letzte Eintragung in den zugeordneten Speicherblock des Pufferspeichers zurückliegt, daß regelmäßig eine solche Bestimmung durchgeführt wird und daß jeder Speicherblock freigegeben wird, der nach einer vorgegebenen Zeit noch als belegt gekennzeichnet ist.

**19.** Vermittlungselement nach Anspruch 18, dadurch gekennzeichnet, daß ein Zähler (Z1) vorhanden ist, der jeweils nach einer Zeit weitergezählt wird, die der Zeit für die Ausgabe einer durchschnittlich langen Zelle entspricht, daß beim Einschreiben eines Blocks in einen Speicherblock des Pufferspeichers in den zugeordneten zweiten Speicherplatz der Zählerstand des Zählers eingetragen wird, daß regelmäßig die Inhalte aller zweiten Speicherplätze vom Zählerstand des Zählers subtrahiert werden und daß der zugeordnete Speicherblock des Pufferspeichers dann freigegeben wird, wenn die Differenz einen vorgegebenen Wert erreicht hat und noch keine Freigabe erfolgt ist.

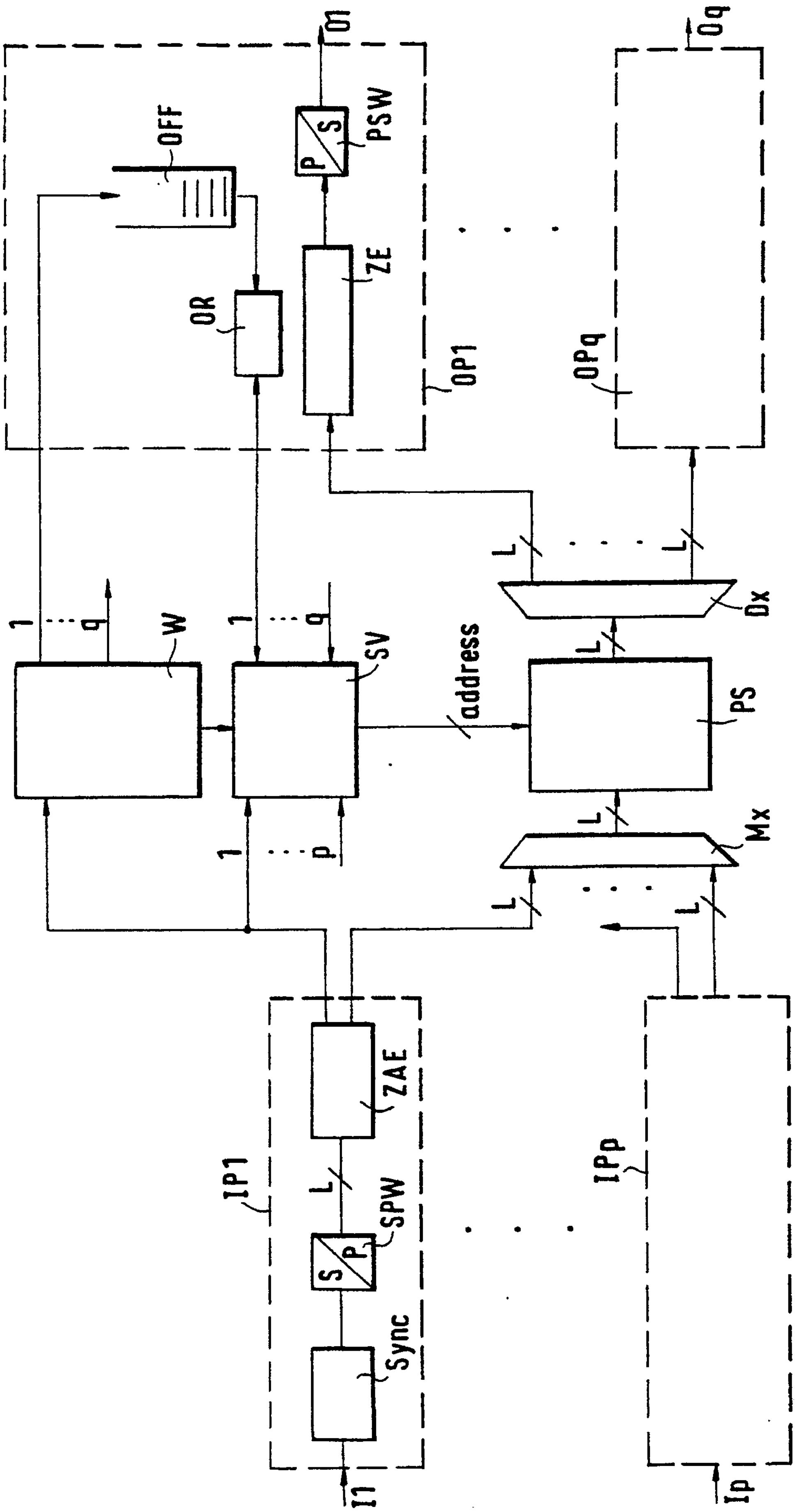
O1
OFF
PSW
P
S
ZE
OR
OP1
Oq
OPq
W
SV
address
PS
Dx
Mx
L
IP1
IPp
ZAE
SPW
Sync
I1
Ip

FIG.1

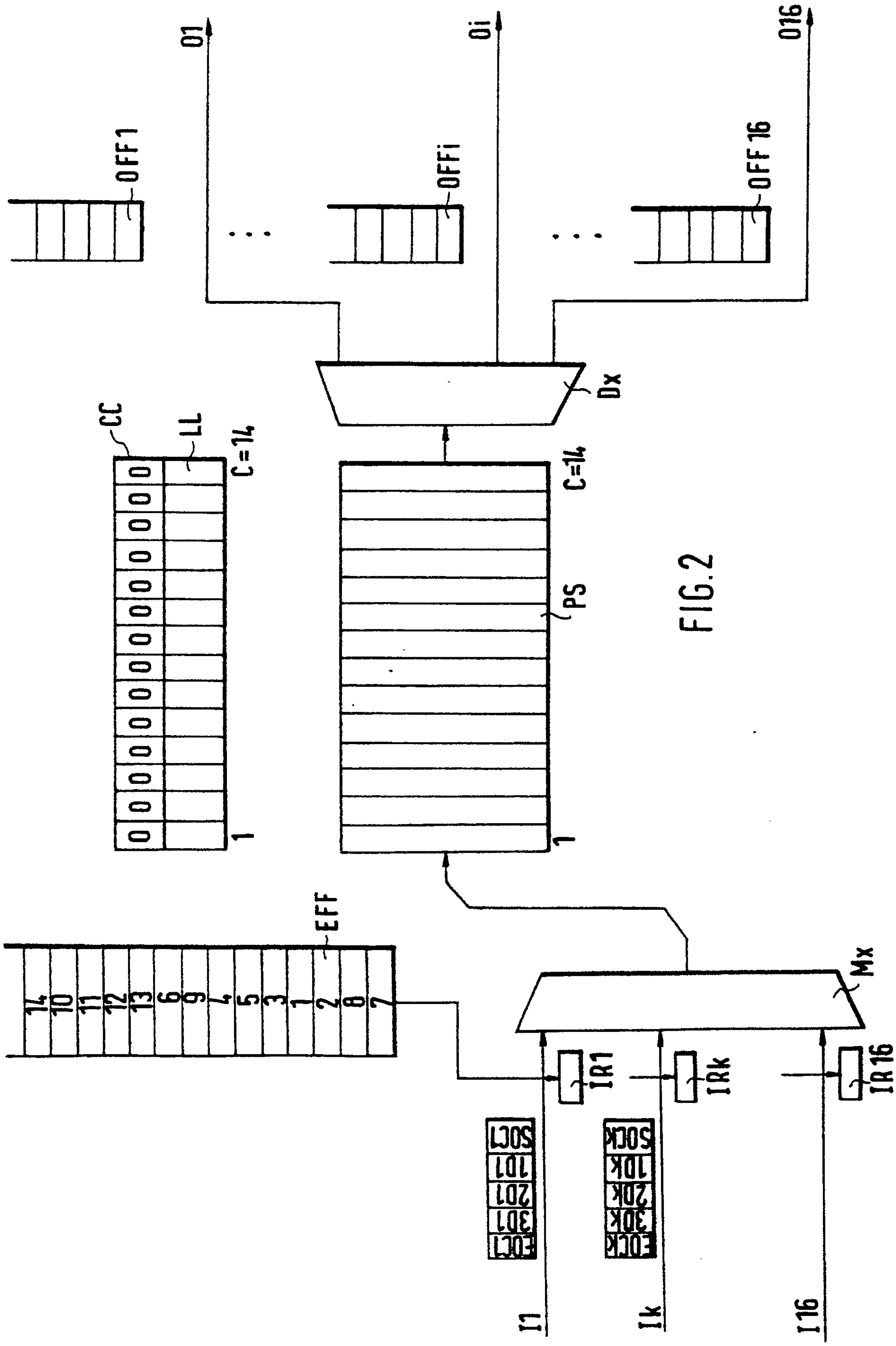
O1
Oi
O16
OFF1
OFFi
OFF16
CC
LL
C=14
Dx
PS
1
EFF
Mx
IR1
IRk
IR16
I1
Ik
I16
SOC1
1D1
2D1
3D1
EOC1
SOCK
1DK
2DK
3DK
EOCK

FIG.2

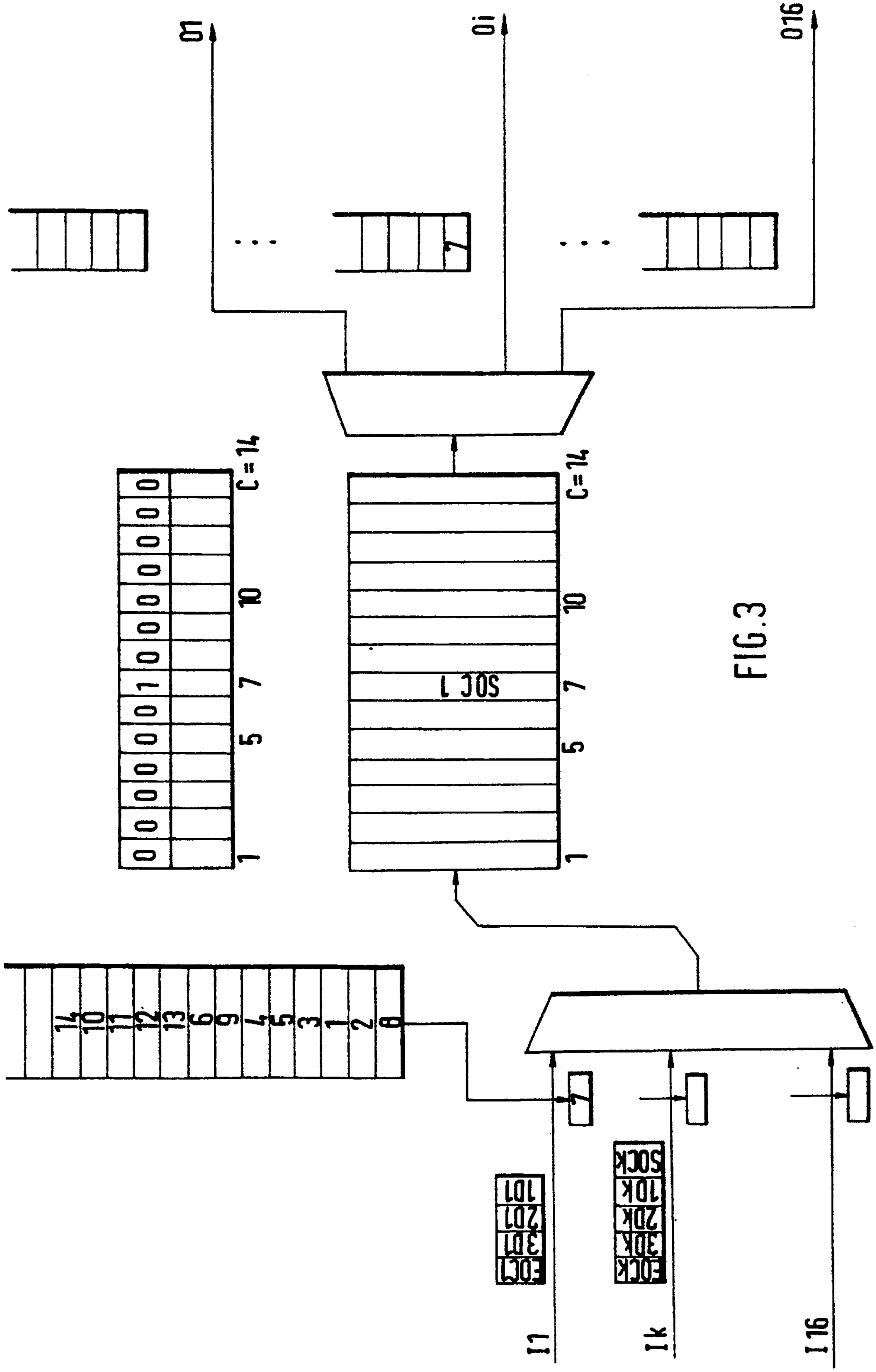

O1
Oi
O16
SOC 1
C=14
I1
Ik
I16
EOC1
3D1
2D1
1D1
EOCK
3DK
2DK
1DK
SOCK


FIG.3

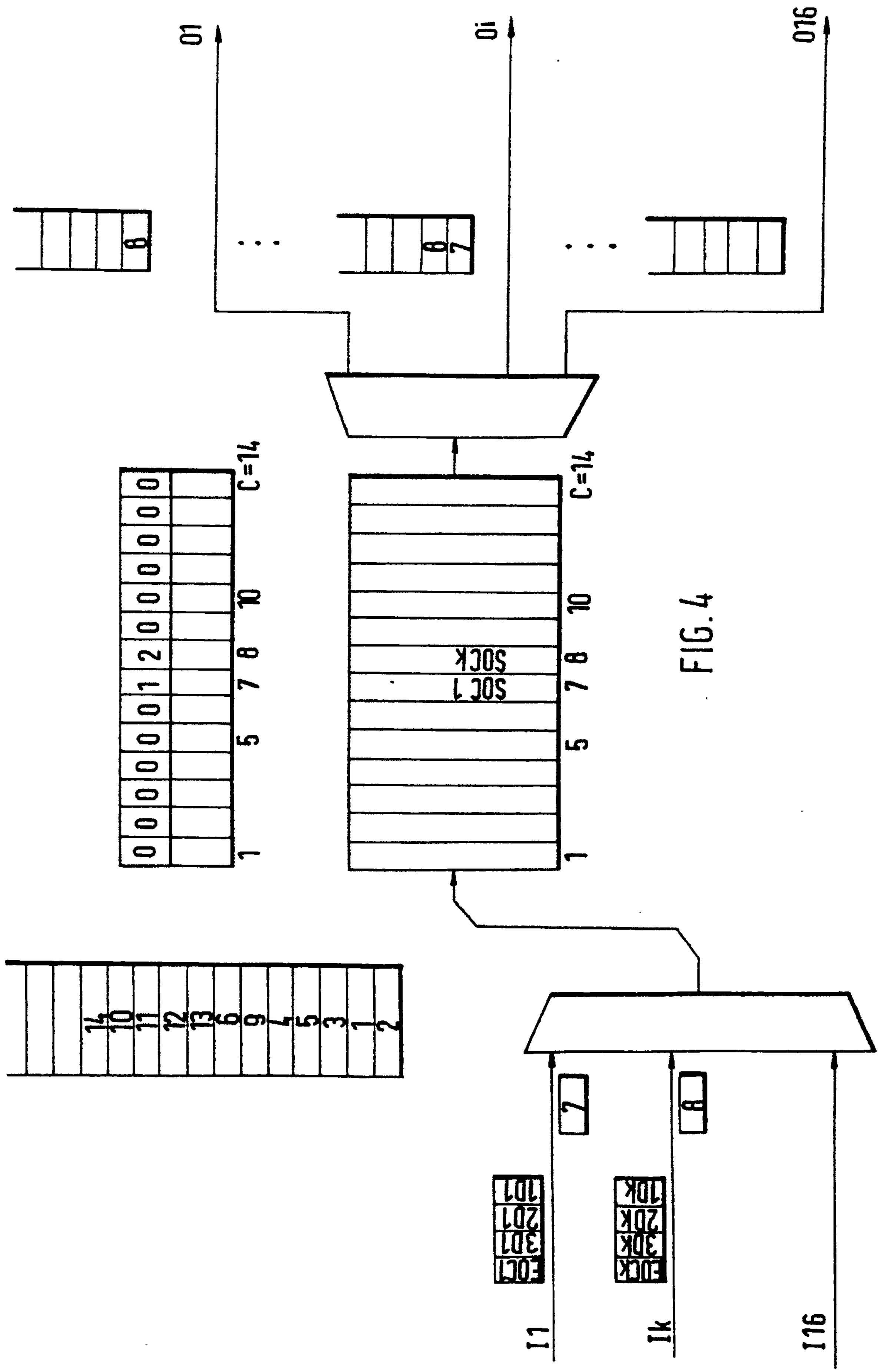
O1
Oi
O16
C=14
SOC 1
SOCK
EOC1
3D1
2D1
1D1
EOCK
3DK
2DK
1DK
I1
Ik
I16

FIG. 4

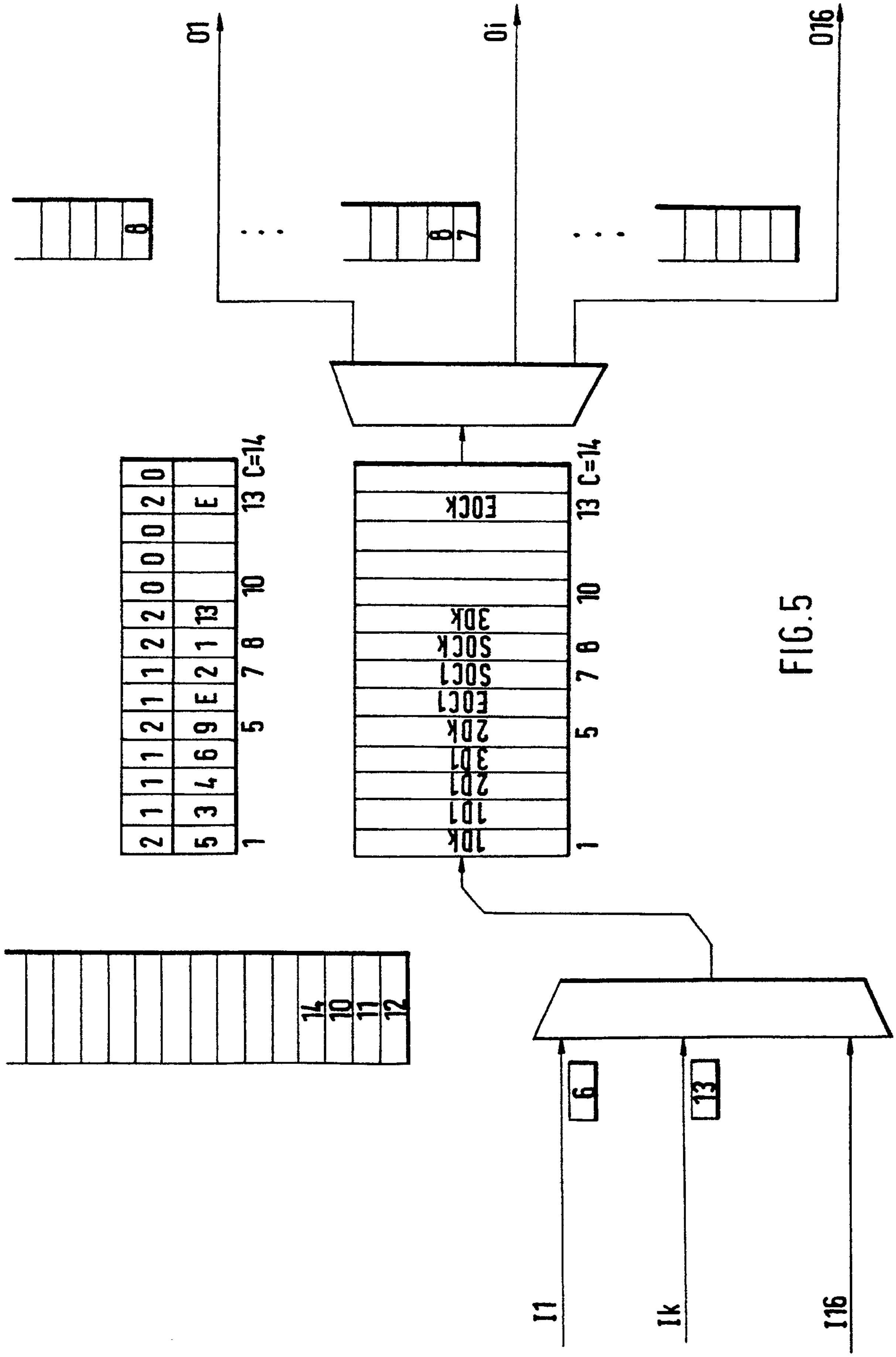

O1
Oi
O16
I1
Ik
I16
C=14
1DK
1D1
2D1
3D1
2DK
EOC1
SOC1
SOCK
3DK
EOCK


FIG.5

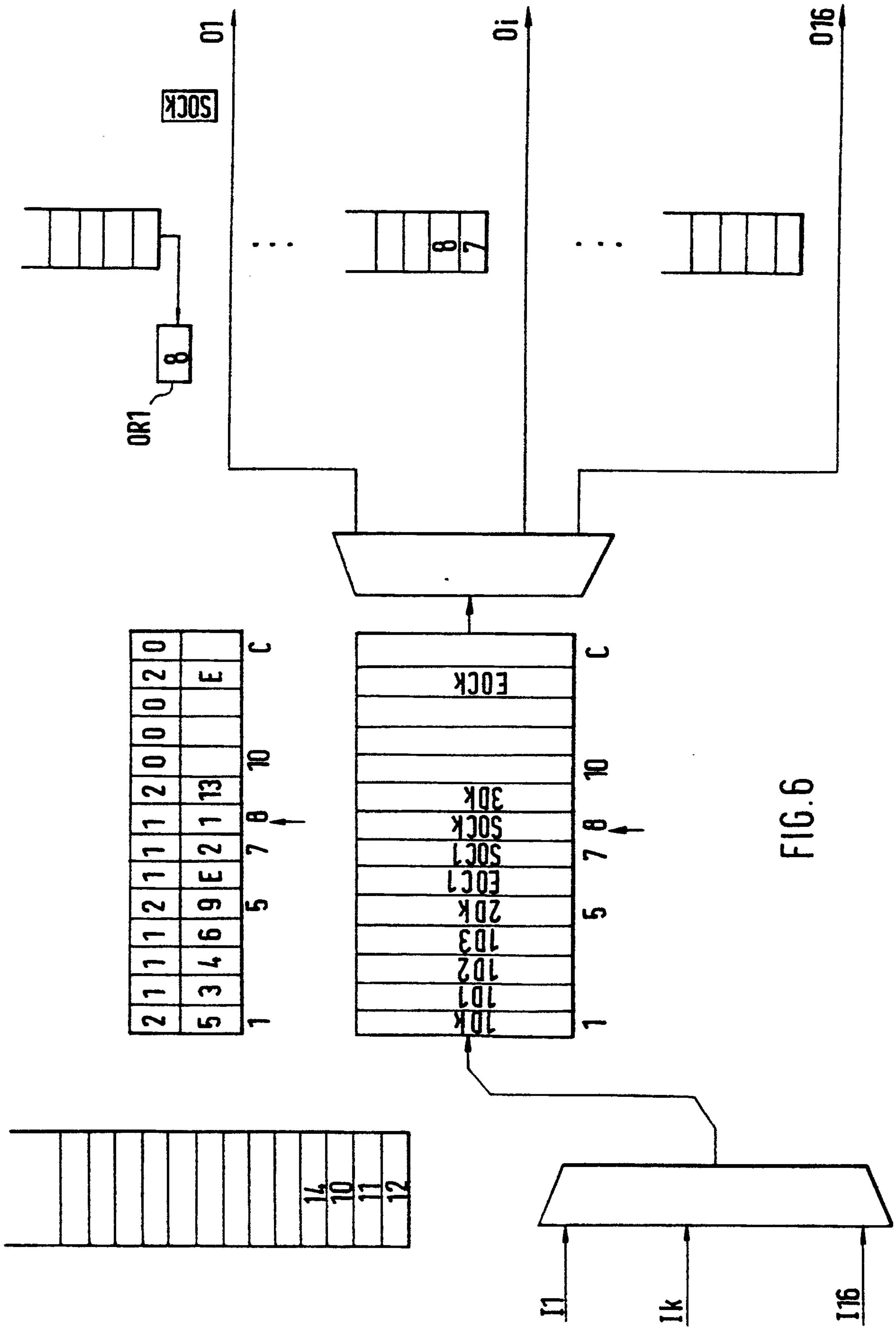

O1
Oi
O16
SOCK
OR1
8
7
1DK
1D1
1D2
1D3
2DK
EOC1
SOC1
SOCK
3DK
EOCK
C
10
5
1
14
10
11
12
I1
Ik
I16


FIG.6

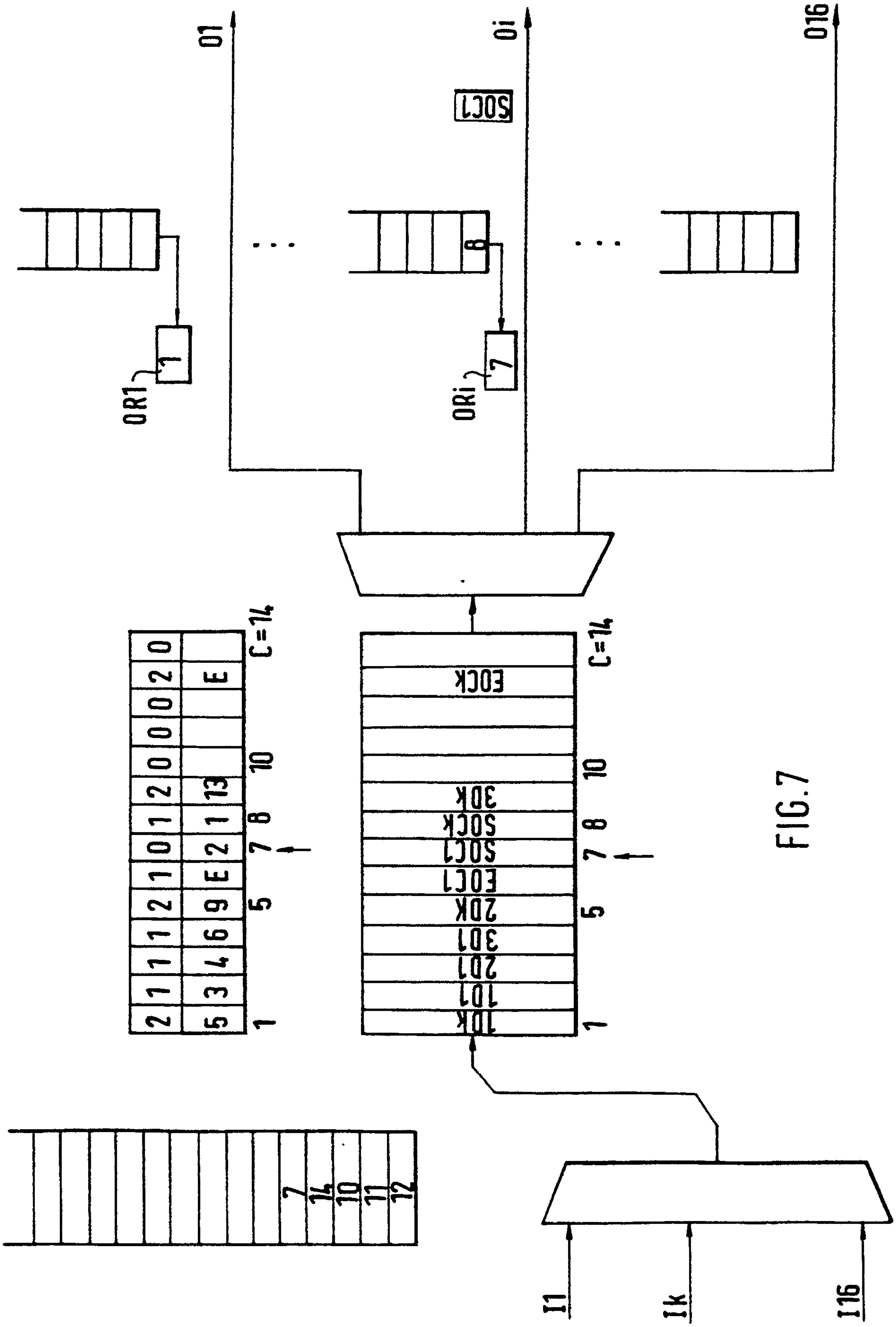
O1
Oi
O16
SOC1
OR1
ORi
C=14
C=14
EOCK
3DK
SOCK
SOC1
EOC1
2DK
3D1
2D1
1D1
1DK
I1
Ik
I16

FIG.7

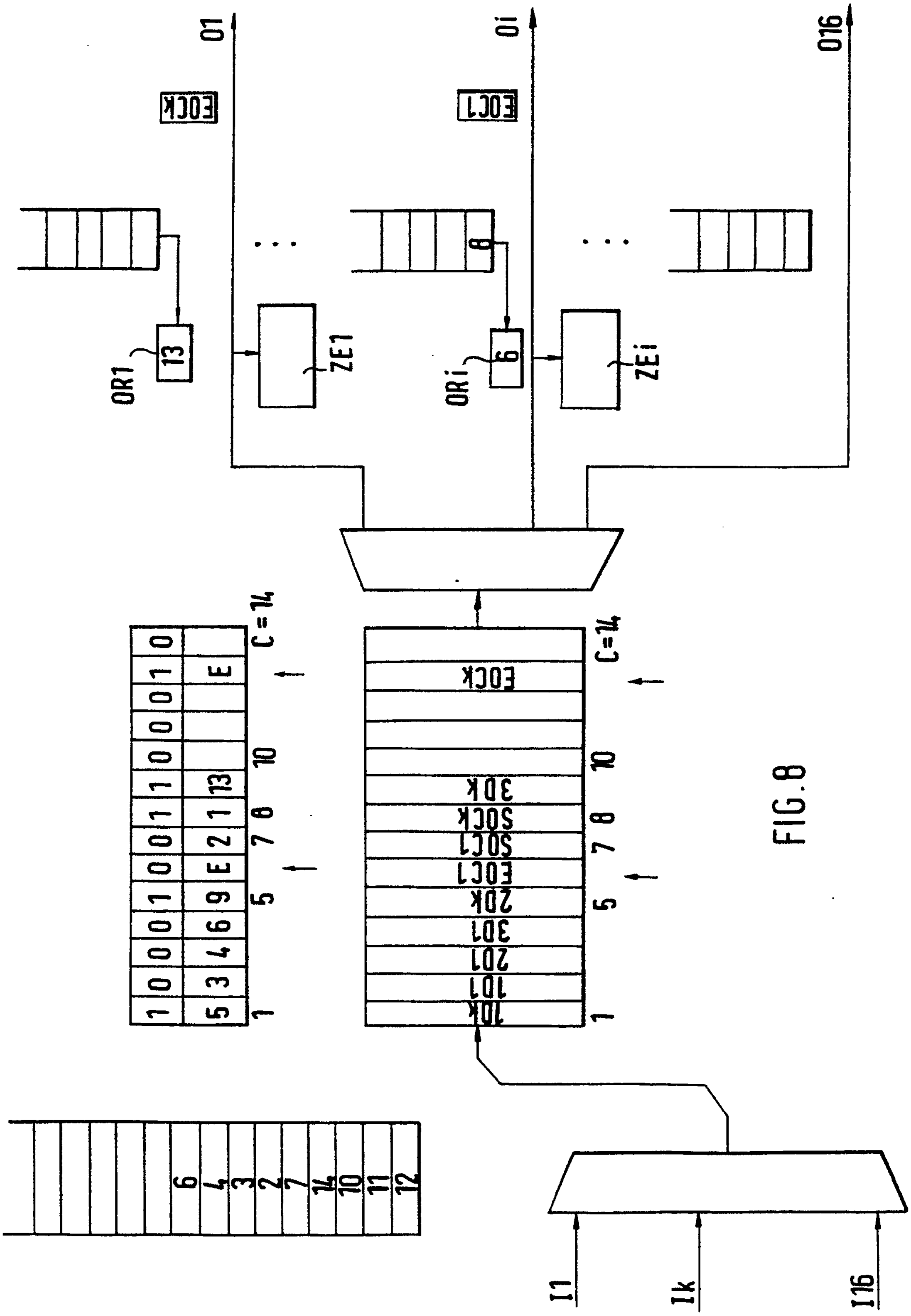
O1
Oi
O16
EOCK
EOC1
OR1
13
ZE1
ORi
6
8
ZEi
C=14
10
1
5
7
8
1DK
1O1
2O1
3O1
2DK
SOC1
SOCK
3DK
I1
Ik
I16

FIG.8

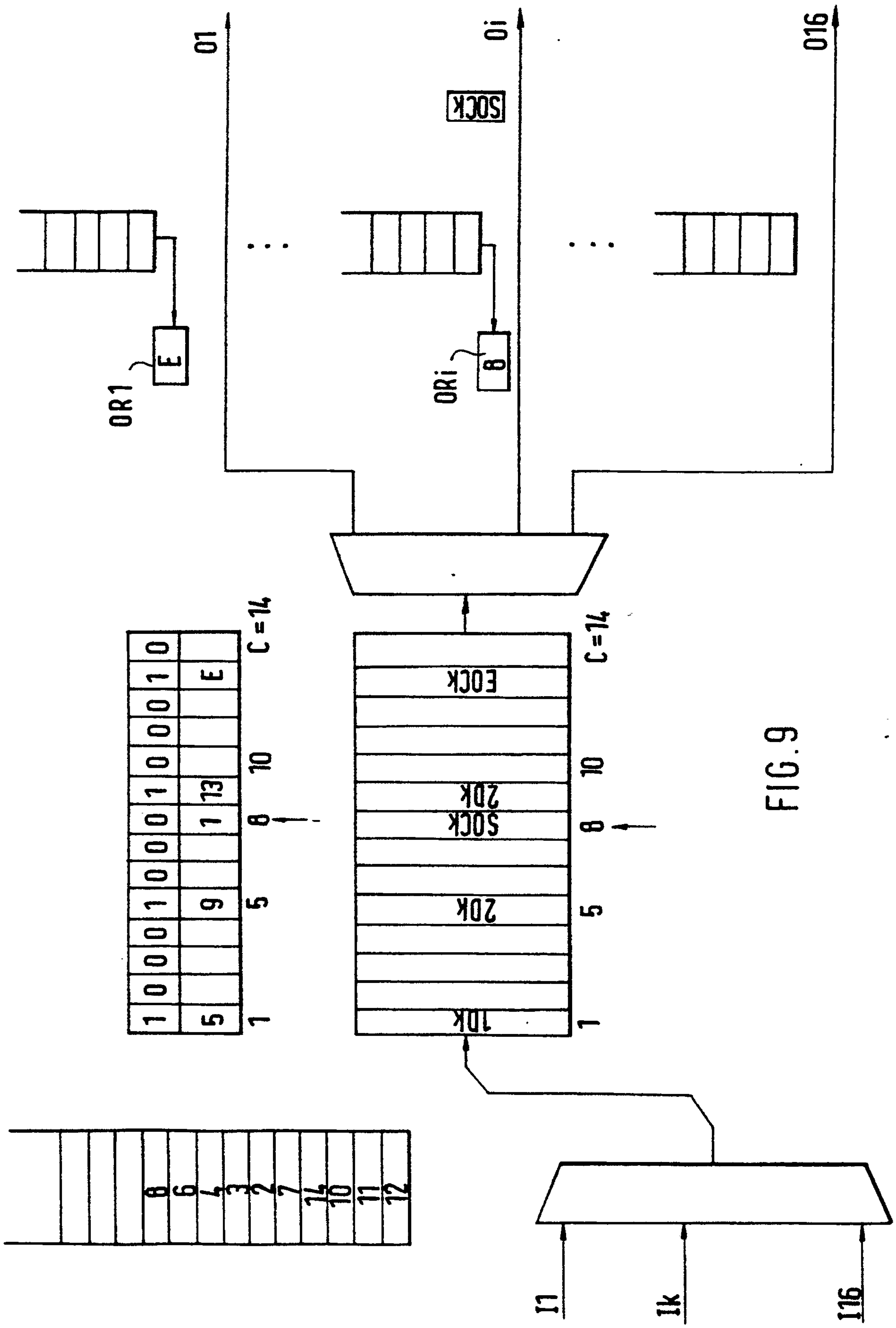


FIG. 9

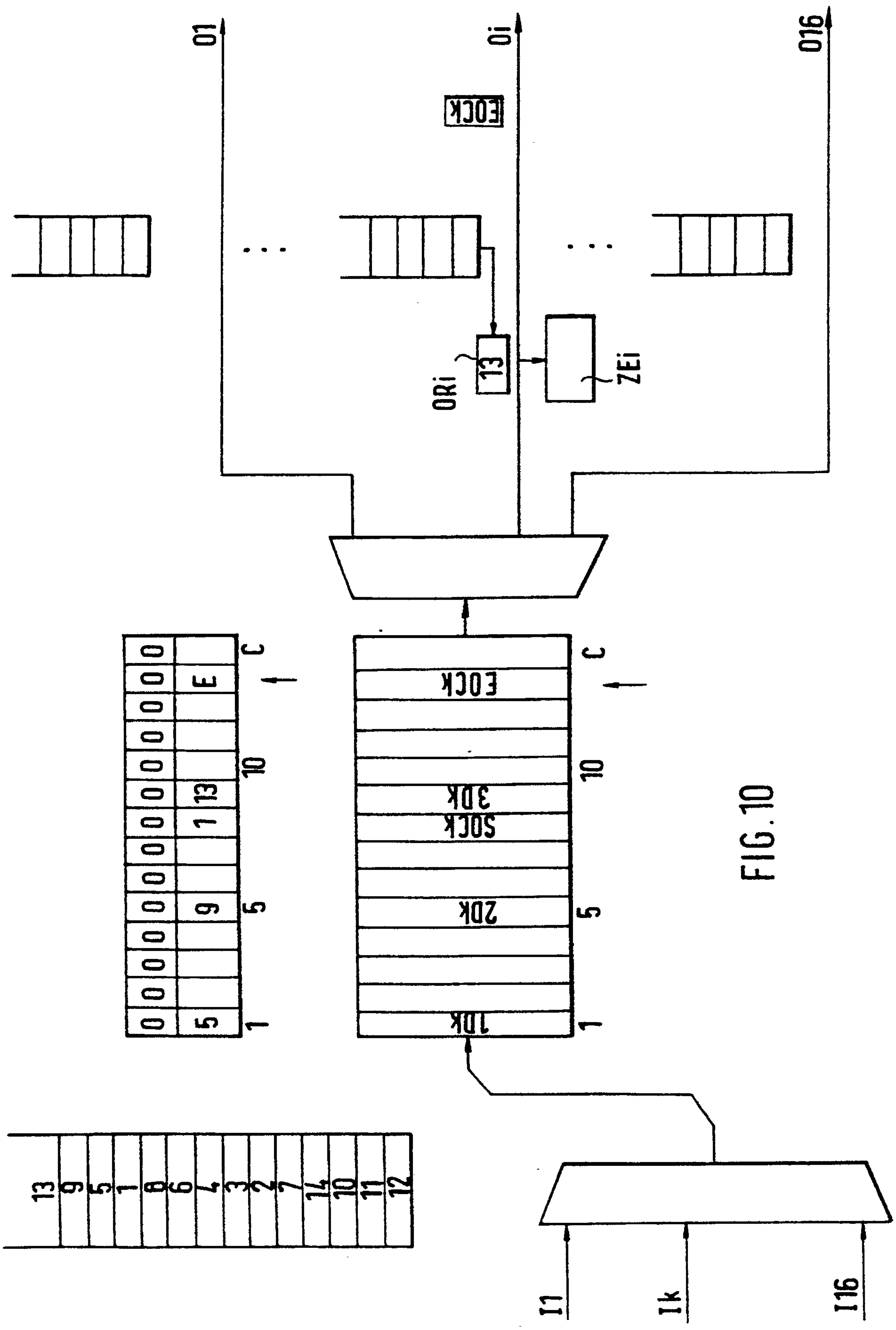
O1
Oi
O16
EOCK
ORi
13
ZEi
1DK
2DK
3DK
5OCK
I1
Ik
I16
1
5
10
C
E
13 9 5 1 8 6 4 3 2 7 14 10 11 12

FIG.10

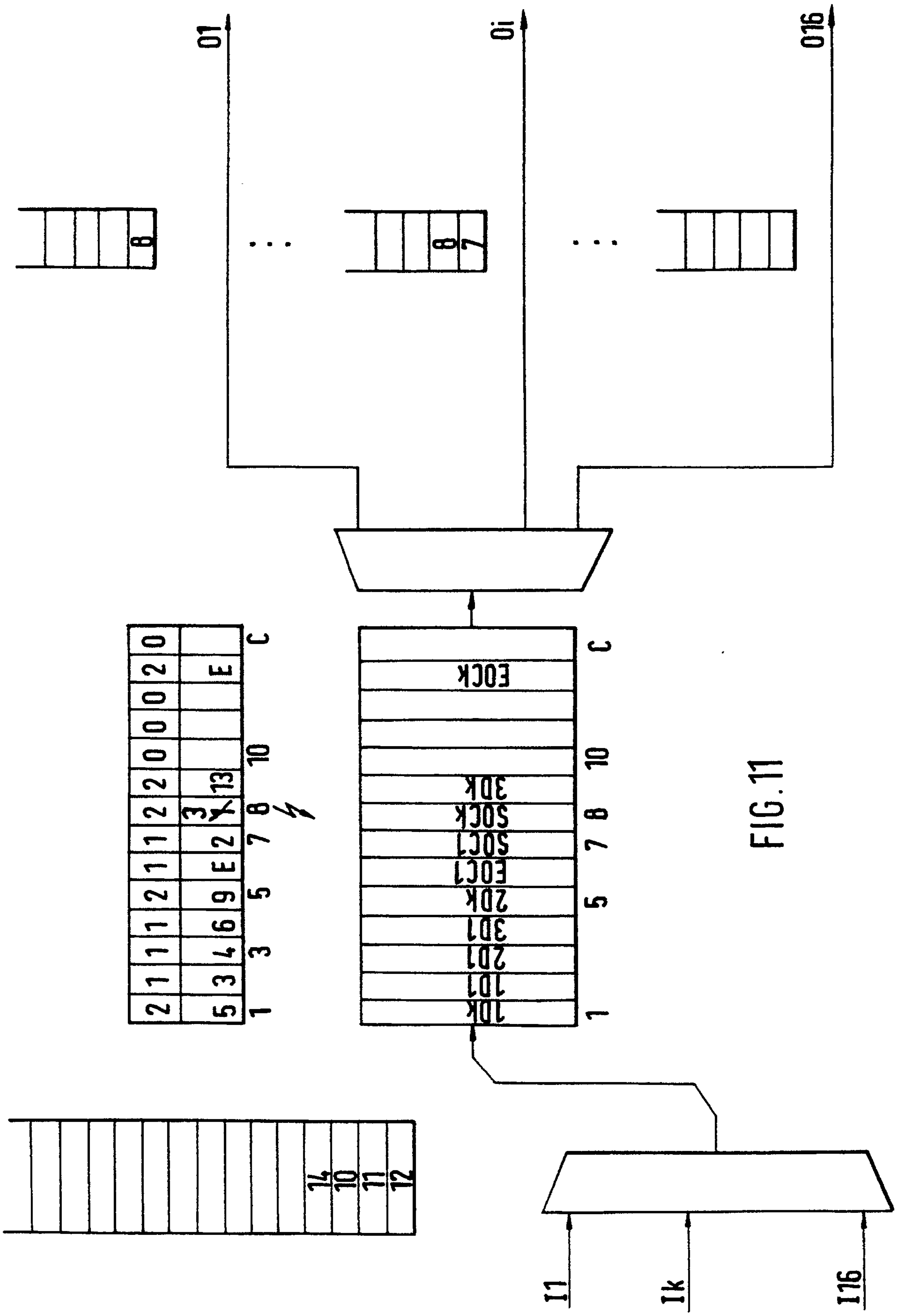


FIG.11

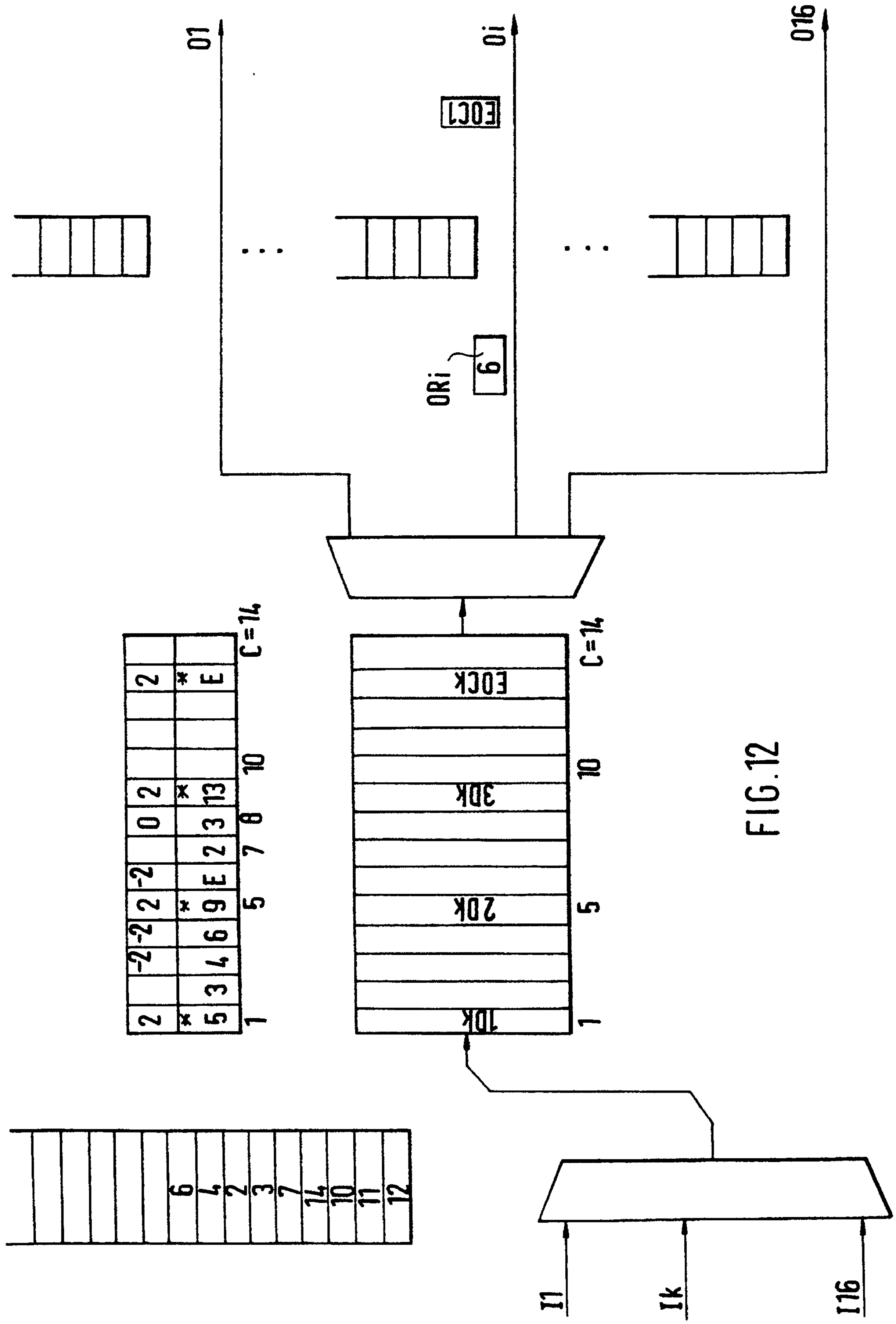


FIG. 12

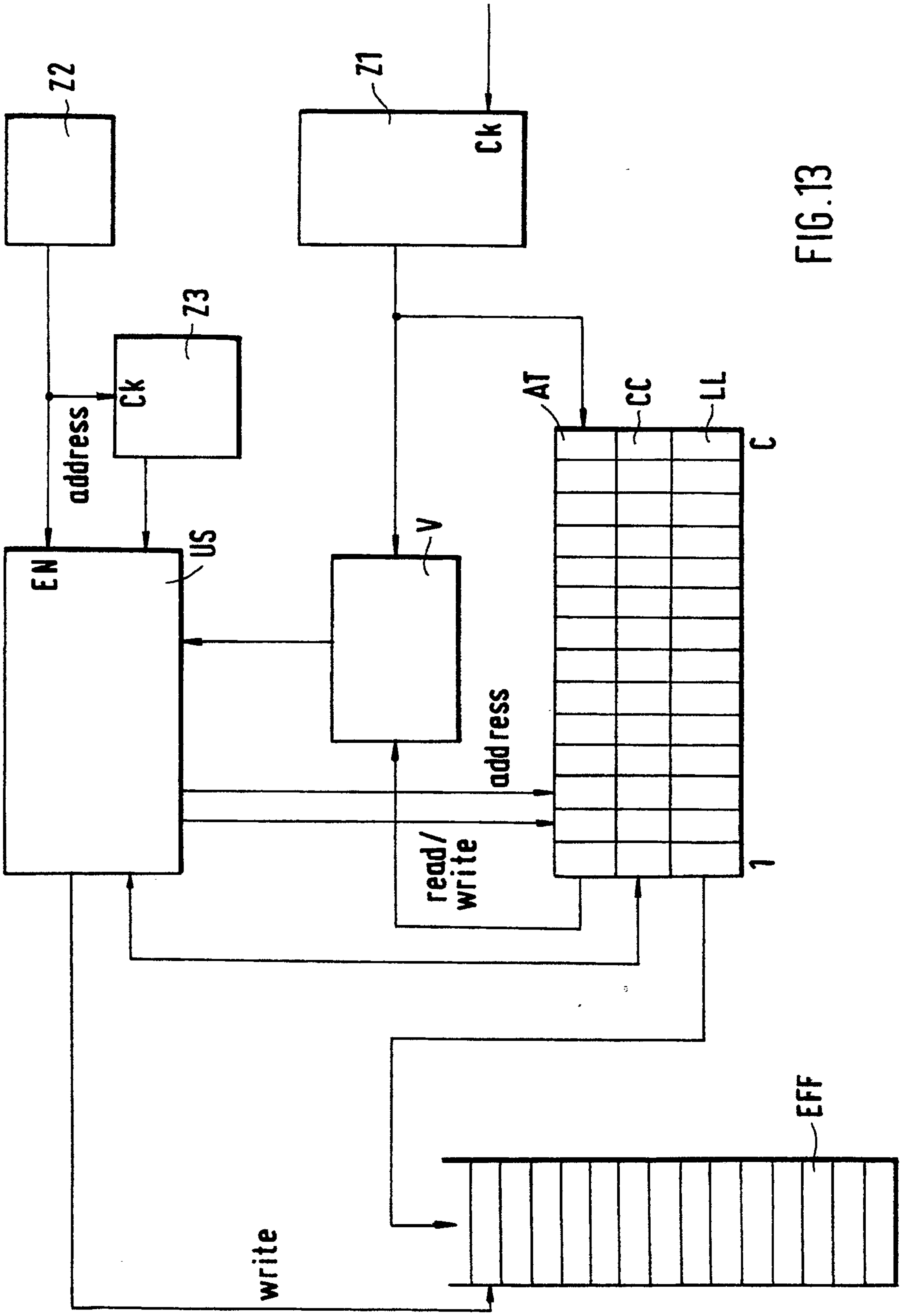
Z2
Z1
Ck
Z3
Ck
address
AT
CC
LL
C
EN
US
V
address
read/
write
1
EFF
write

FIG.13

| | | | | | | | | | | | | | | | |
|---|---|---|---|---|---|---|---|---|---|---|---|---|---|---|---|
| 0 | 0 | 1 | 1 | 0 | 1 | 1 | 1 | 1 | 1 | 1 | 1 | 1 | 0 | --- | 0 |
| 0 | 1 | 0 | 1 | 1 | 0 | 1 | 1 | 1 | 1 | 1 | 1 | 1 | 1 | --- | 0 |

FIG.14

| | | | | | | | | | | | | | | | |
|---|---|---|---|---|---|---|---|---|---|---|---|---|---|---|---|
| 0 | 0 | 1 | 1 | 0 | 1 | 1 | 1 | 1 | 1 | 1 | 1 | 1 | 0 | --- | 0 |
| 0 | 0 | 0 | 0 | 0 | 0 | 0 | 0 | 0 | 0 | 0 | 0 | 0 | 0 | --- | 0 |

FIG. 15A

| | | | | | | | | | | | | | | | |
|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | --- | 0 |
| 0 | 1 | 1 | 1 | 1 | 0 | 1 | 1 | 0 | 1 | 0 | 0 | 0 | 1 | --- | 0 |

FIG. 15B

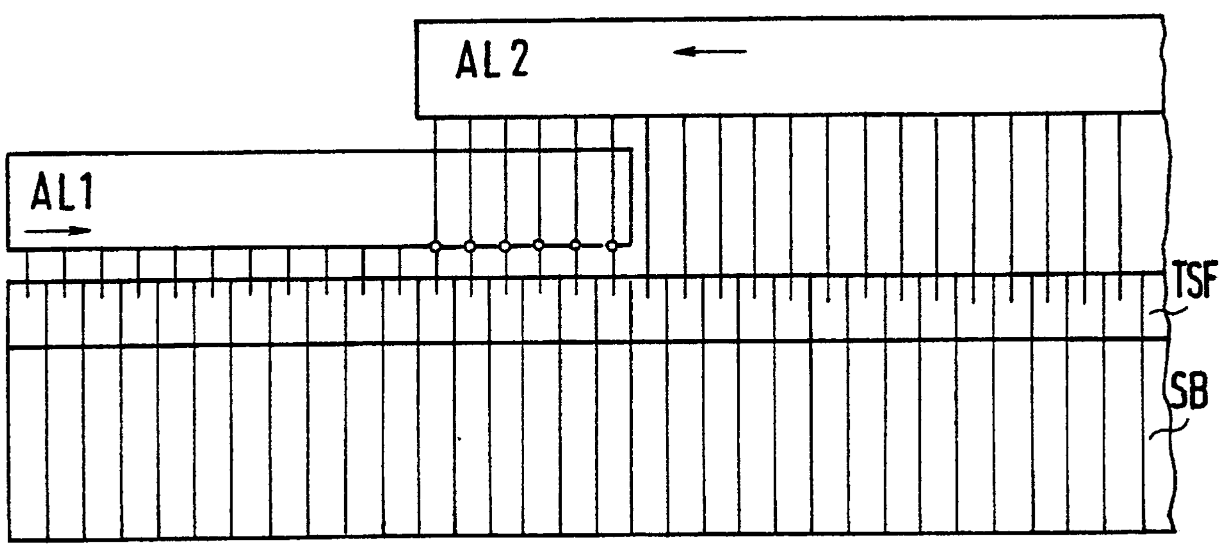


FIG. 16